# EUROPEAN PATENT SPECIFICATION

(11) **EP 2 394 780 B1**
(45) Date of publication and mention of the grant of the patent: **03.07.2013**
(21) Application number: 10738226.9
(22) Date of filing: 04.02.2010
(51) Int. Cl.: B23Q 1/03

(54) **ADAPTABLE SUPPORTING DEVICE WITH INDEXED RELATIVE POSITIONING**
ANPASSBARE STÜTZVORRICHTUNG MIT INDEXIERTER RELATIVER POSITIONIERUNG
DISPOSITIF DE SUPPORT ADAPTABLE À POSITIONNEMENT RELATIF INDEXÉ

(30) Priority: 05.02.2009 ES 200900242 U
(43) Date of publication of application: 14.12.2011
(73) Proprietor: Loxin 2002, S.l., Navarra (ES)
(72) Inventor: BAIGORRI HERMOSO, Julián, E-31191 Esquiroz Navarra (ES); AGUIRRE ARTIEDA, José María, E-31191 Esquiroz Navarra (ES)
(74) Representative: Schäfer, Matthias W.
(86) International application number: PCT/ES2010/000046
(87) International publication number: WO 2010/089430

(56) References cited:
- ES-A1- 2 188 327
- ES-A1- 2 188 327
- US-A- 4 966 209
- US-A- 5 121 907

## Description

This document refers, as its title indicates, to an adaptable supporting device with indexed relative positioning, of the type that includes a plurality of vertical actuators, arranged on bridge modules positioned transversely above a recess and movable relative to one another, used in industry during machining processes, to attach parts having different or irregular shapes, characterized in that the device includes two double sets of hydraulic cylinders between every two modules, each of said sets comprising two hydraulic cylinders of different stroke lengths mounted in opposite directions and connected one to another at the rear of their heads, thereby allowing every two bridge modules to move relative to one another in a manner indexed in four fixed positions depending on which cylinders are activated.

At the present time, in industry in general and in the aeronautical sector in particular, attachment tools or devices for supporting parts during machining processes are known and widely used. These tools or devices entail a special problem in that each different part requires a different attachment device. In the aeronautical industry, aeroplanes are formed by numerous parts of different shapes and sizes, and thus traditionally a great number of these tools has been used.

Certain generic supporting devices have been developed that are adaptable to the shape of different parts, commonly known as "tool matrixes", which are semi-flexible programmable devices that, through a combination of vertical actuators of variable height, enable different shaped parts to be supported.

Said known adaptable supporting devices may be of various types:

*Passive tool matrix -* It presents a matrix layout of passive vertical actuators. The matrix layout of passive vertical actuators means that the said actuators are all on a table at a fixed distance one from another, both longitudinally and transversely, in the manner of a grid. The term "passive" means that the vertical actuators do not have a drive on any of the three axes and therefore their vertical adjustment must be carried out by other devices, such as external handlers or by the machining machine itself working in conjunction with the flexible tool. A drawback presented by this device is that it is very slow to reposition for the different parts to be machined, since the handler, or the machine, positions all of the actuators one by one and this may take several hours.

*Vertically active tool matrix -* It presents a matrix layout of vertical actuators. This device is the same as the previous one, the only difference being that each vertical actuator has a drive of its own. This allows the simultaneous positioning of all of the actuators at the same time by means of an external control device such as, for example, a computer or PLC-type industrial controller, which reduces positioning time to just a few minutes. As in the previous type it has the drawback that it does not allow X-axis travel of the actuators, which allows flexible positioning.

*Flexible tool matrix -* Instead of a grid-type or fixed-pitch matrix, as in the previous cases, the layout of the actuators on the work area can be varied by programming. This flexibility of the layout permits the position of the actuators to be adjusted by individual drives at strategic points of the part to be machined, in order to optimize their capacity to support weight or to improve their adaptation to parts with different shapes.

This type of device has the drawback that the density of the actuators or suction pads varies depending on the size of the part to be supported; that is to say, for large-sized parts the density will be less than for smaller-sized parts. Furthermore this type of devices has the added disadvantage of the excessive cost due to the number of drives involved and the fact that they are ergonomically unsuitable.

A variation on this latter type of device is disclosed in Spanish Patent 200001906 "*Flexible and programmable system of relative positioning for supporting irregular parts*" which includes a plurality of vertical actuators arranged on bridge modules positioned transversely above a recess, connected one to another, and, in particular, to those opposite, by means of the actuators located at the ends of said bridges, in such a way that the end its body is anchored to a bridge whilst the end of the rod is connected to the opposite bridge. In spite of enhancing flexibility in positioning, this system has the drawback that the actuators located at the ends of the bridges require high precision to be able to place them in the appropriate position, so that their economic cost is fairly high, notably affecting the high economic cost of the device.

ES 2 188 327 A1 discloses a flexible and programmable relative positioning system for supporting irregular parts for their mechanisation. The system incorporates a multitude of columns or actuators on whose upper ends of its rods the parts are fixed. Multiple inter-related bridges are placed transversely in a pit using actuators, while they comprise longitudinally a significant multitude of actuators, whose rod emerges on top of the bridge. These bridges are connected one to another at their respective ends by means of one pneumatic cylinder. The distance between the bridges is limited to two different values: The connecting cylinder is either deactivated (minimum distance) or activated (maximum distance). Contrary to this, the present invention is more flexible and not limited to two different distances.

To overcome currently existing issues in relation to supporting parts in industry, especially in the aeronautical industry, the adaptable supporting device with indexed relative positioning that is the object of this invention has been designed, said device consisting of a plurality of vertical actuators movable along the Z axis, being fitted on their top part with a magnetic vacuum cup and placed on various cross members that are movable along the X-axis, each having a determined number of actuators depending on the width of the parts to be picked up and the characteristics of the material to be machined, metal or compound material, etc...

In turn, each cross member is mounted on two parallel-mounted guides with rolling elements, with two skids at each of the sides and a safety brake between both, preferably of the spring-braking type, in such a way that, once positioning has been performed, the air supply to these brakes is deactivated and each cross member remains fixed to the longitudinal guides.

The cross members are connected to each other by means of two pneumatic cylinders with different strokes, -K- for that with the longer stroke and -k- for that with the shorter stroke, which are joined by their heads or rear parts in such a way that, depending on which pneumatic cylinder is activated, the distance -X- between cross members is adjusted, in a manner indexed in four different values, A, B, C or D:
- A - Minimum distance (both cylinders are deactivated) A = X
- B - Second distance (shorter stroke cylinder activated) B = X+k
- C - Third distance (longer stroke cylinder activated) B = X+K
- D - Maximum distance (both cylinders activated) B = X+k+K

Each pneumatic cylinder will be controlled by its corresponding electro-valve driven by a PLC-type control device or external computer system, according to its programming.

One of the cross members, which can be any of them, clearly has to be fixed to the base or to the floor that serves as the element of origin for positioning the rest of the cross members, giving rise to a programmable origin matrix and the possibility of the distances between cross members being all different one from another.

The adaptable supporting device with indexed relative positioning presented, provides numerous advantages over those currently available, the most important being that it has the advantage of having the capacity to program the motorized positioning of each actuator individually along the Z axis and modularly and pneumatically in the direction of the X axis.

Particularly noteworthy is the considerable advantage achieved by using two pneumatic cylinders with different travels or strokes connected by their heads or rear parts to accomplish indexed positioning, since this permits the use of more economical pneumatic cylinders rather than the costly precision actuators needed in other devices, consequently allowing economic savings on the unit.

Another important advantage is that this device enables parts to be picked up that have different curvatures and very different lengths depending on their morphology, so that positioning is carried out in less time than with any of the aforementioned devices and at notably lower cost.

The greatest advantage over the previously mentioned systems is the time saved during positioning, since once the corresponding order has been received, this time is reduced to the time required to position one of them, given that when they move each one pulls its other opposite one, notably increasing the travelling speed of the cross members, given that their speed is relative to that of their predecessor, performing a type of telescopic movement.

Another important advantage is the low start-up, adjustment and maintenance costs due to its simplicity in comparison with the complexity of the other systems.

Finally, an advantage of our invention to be highlighted is that it is highly ergonomic in loading and unloading operations since the origin of vertical positioning is preferably 600 mm from the floor, which implies easy access to the part to be machined and the possibility of being able to walk through the whole area without the risk of falls.

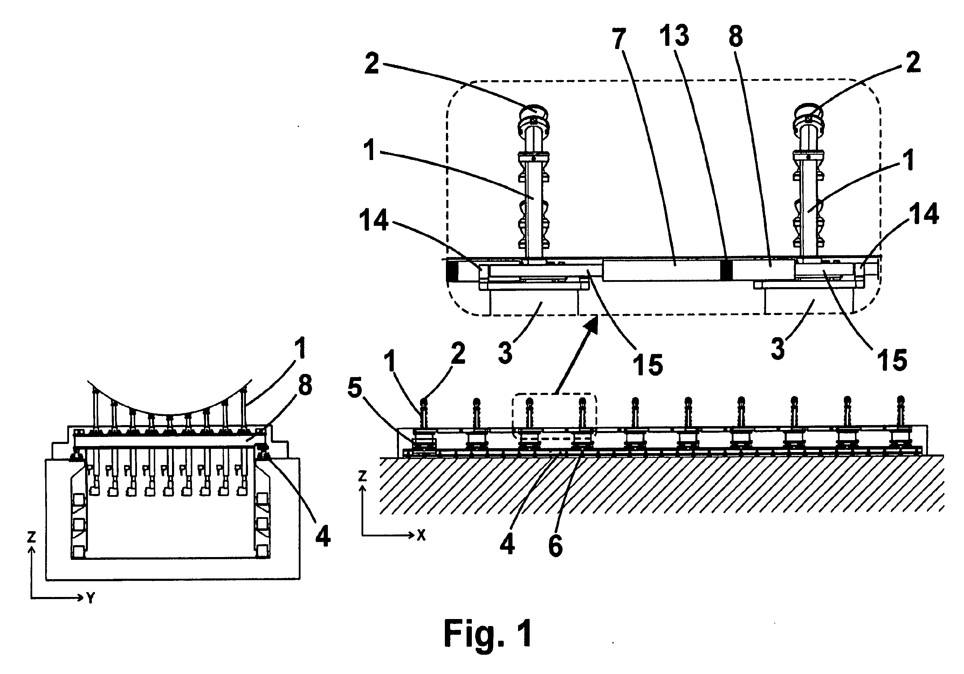

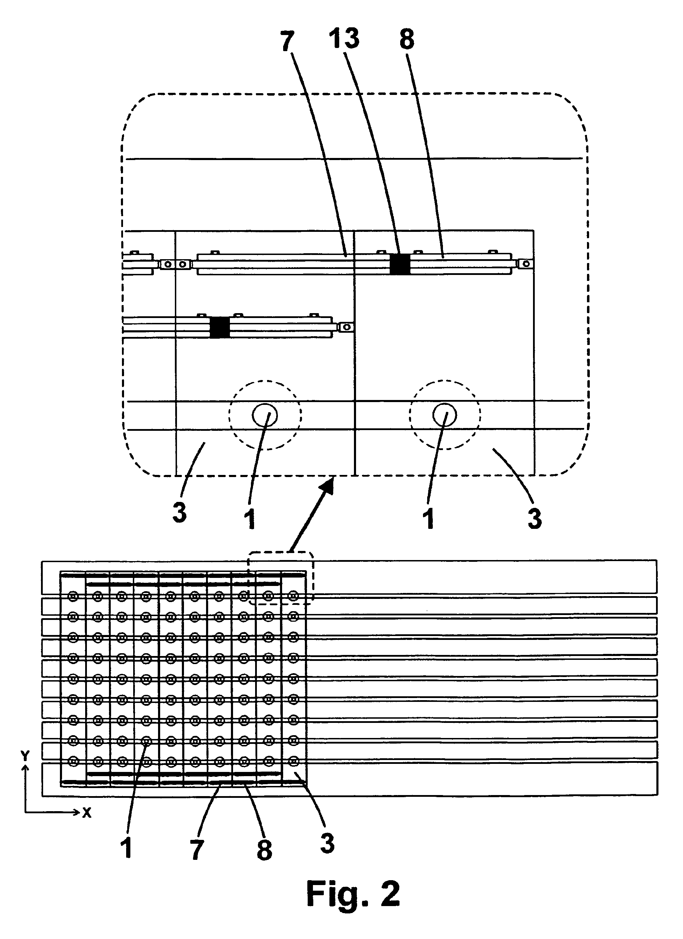

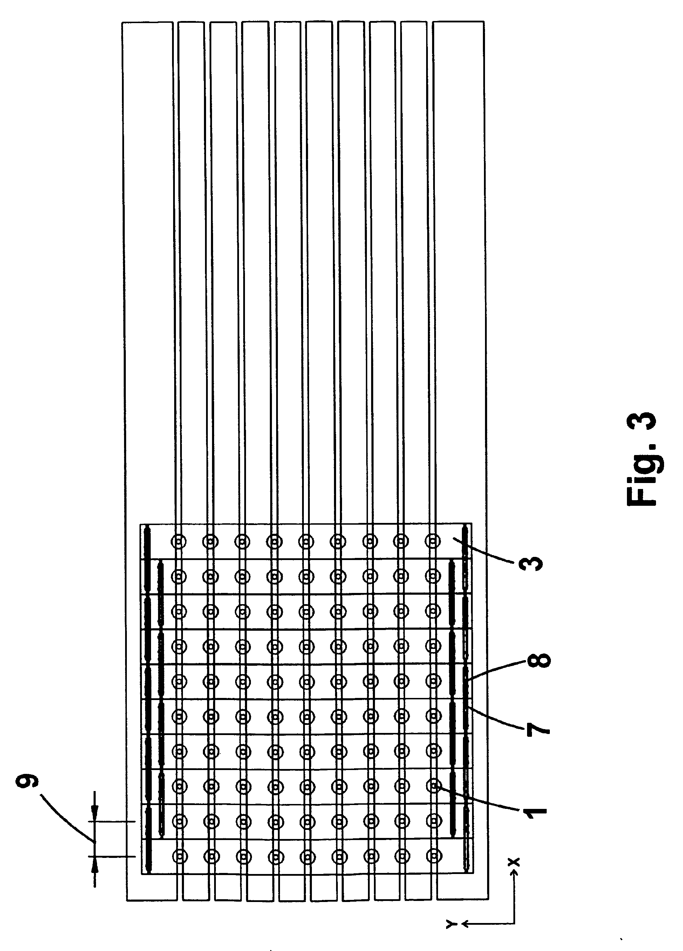

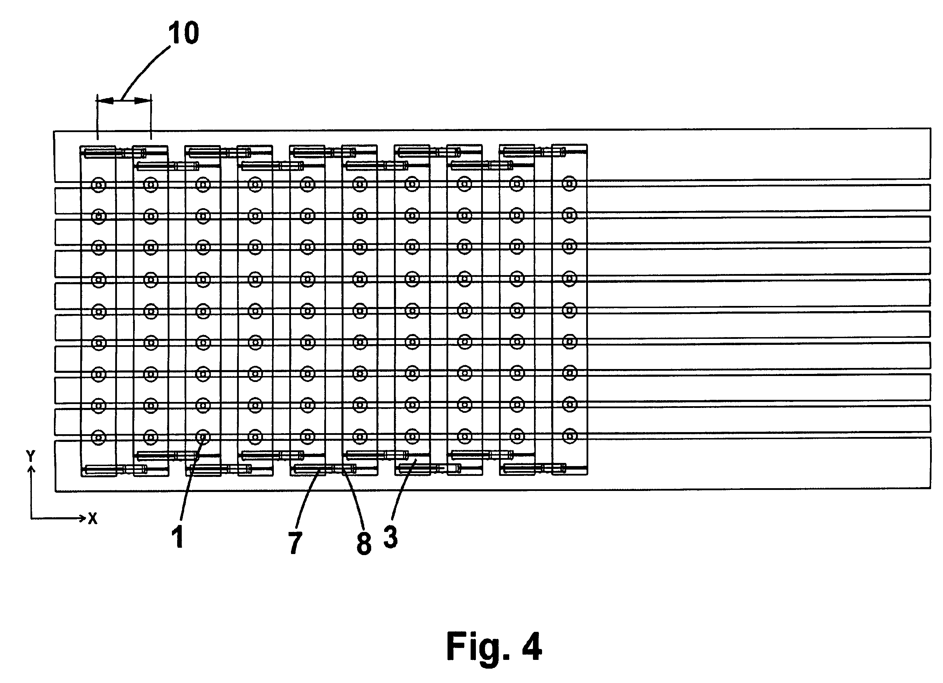

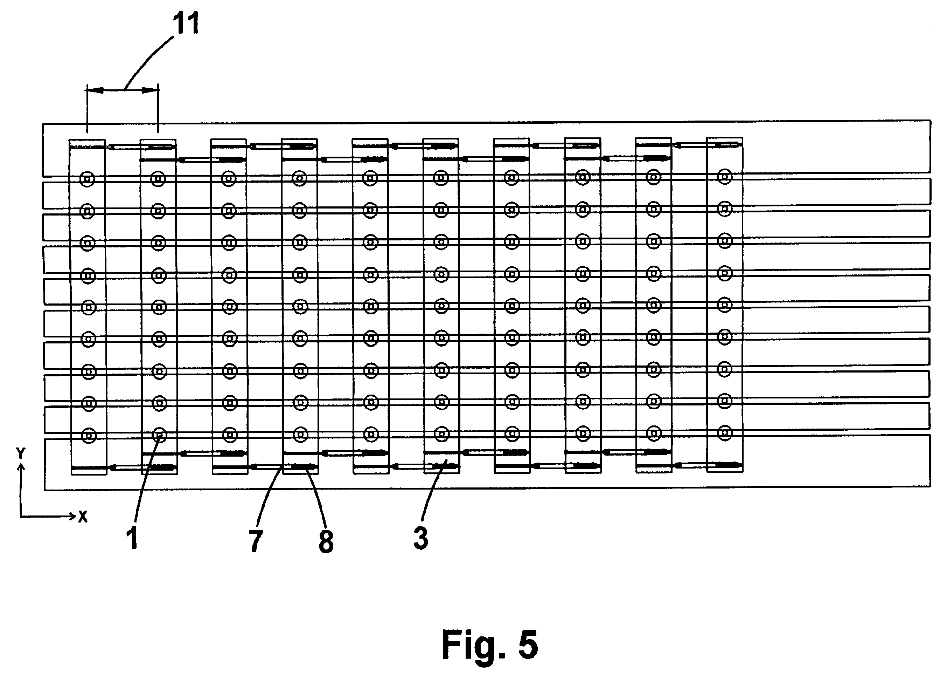

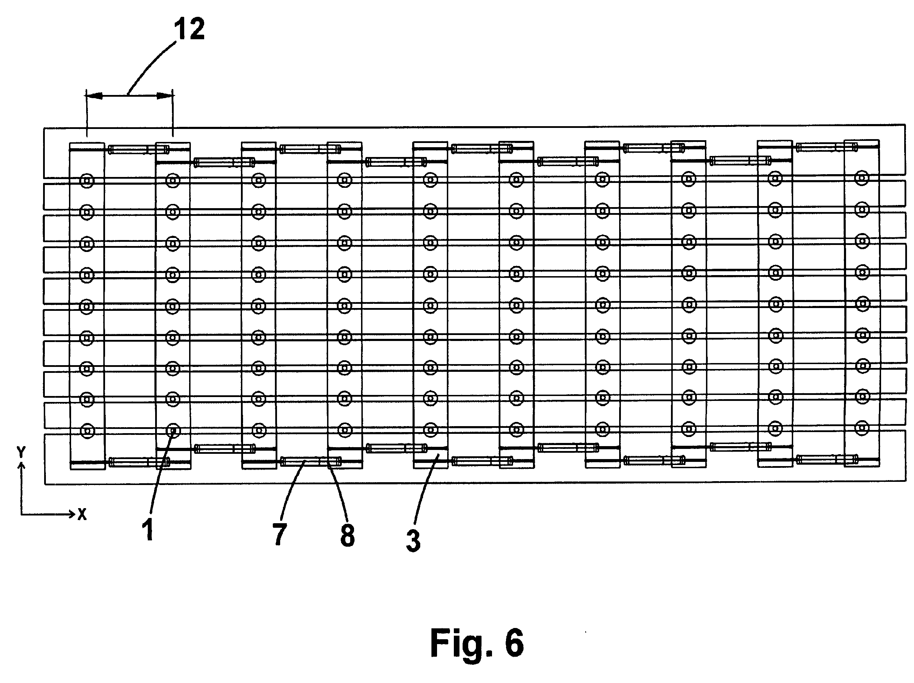

In order to gain a clearer understanding of the object of the present invention, a preferred practical embodiment of an adaptable supporting device with indexed relative positioning is represented in the attached drawing.

In said drawing, figure -1-shows side views of the device as a whole, with an enlarged detail of the profile.

Figure -2- shows a top view of the invention, with an enlarged detail.

Figure -3- shows a top view of the invention, the two cylinders not being activated and hence the distance -X- between cross members being the minimum.

Figure -4- shows a top view of the invention, the cylinder with the shorter stroke being activated and the distance between the cross members being the minimum plus the -k- stroke.

Figure -5- shows a top view of the invention, the cylinder with the longer stroke being activated and the distance -X- between cross members being the minimum plus the -K- stroke.

Figure -6- shows a top view of the invention, the two cylinders being activated and the distance -X- between cross members being the minimum plus the -K- plus the -k- strokes.

The adaptable supporting device with indexed relative positioning that is the object of the present invention is basically formed, as can be seen in the attached drawing, by a plurality of vertical actuators (1), movable along the Z axis, fitted on their top part with a magnetic vacuum cup (2) and arranged on cross members (3), movable along the X axis, each one with a set number of vertical actuators (1) according to the width of the parts to be picked up and the characteristics of the material to be machined, metal or compound materials, etc...

Each cross member (3) is mounted on two guides (4) with rolling elements, parallel-mounted, with two skids (5) at each of the sides and a safety brake (6) between both, preferably of the spring-braking type, in such a way that, once positioning has been performed, the air supply to these brakes is deactivated and each cross member remains fixed to the longitudinal guides (4).

The cross members (3) are connected to each other at each of their ends by means of two pneumatic cylinders (7,8) with different strokes, -K- for that with the longer stroke (7) and -k- for that with the shorter stroke (8), joined by their heads or rear parts (13) and connected to the cross member (3) at the end (14) of the rod (15) in such a way that, depending on which pneumatic cylinder (7,8) is activated, the distance -X-between cross members is adjusted in a manner indexed in four different values, A, B, C or D:
- A (9) - Minimum distance - both cylinders (7,8) deactivated
- B (10) - Second distance - shorter stroke cylinder (8) activated
- C (11) - Third distance - longer stroke cylinder (7) activated
- D (12) - Maximum distance - both cylinders (7,8) activated

## Claims

1. Adaptable supporting device with indexed relative positioning, of the type that includes a plurality of vertical actuators (1), arranged on cross members (3) positioned over a recess and movable relative to one another, used in industry during machining processes to attach parts having different or irregular shapes, **characterized in that**
the cross members (3) are connected one to another at their ends by means of two pneumatic cylinders (7, 8) of different stroke lengths, connected one to another at the rear of their heads or rear parts (13) and connected to each cross member (3) at the ends (14) of each rod (15).

2. Adaptable supporting device according to claim 1,
wherein the cross members (3) are adjusted by the connected pneumatic cylinders (7, 8) with the longer strokes and the shorter strokes in distances with four different values:
A) - Minimum distance - both cylinders (7,8) deactivated
B) - Second distance - shorter stroke cylinder (8) activated
C) - Third distance - longer stroke cylinder (7) activated
D) - Maximum distance - both cylinders (7,8) activated

3. Adaptable supporting device according to claims 1 or 2, wherein each pneumatic cylinder (7, 8) is controlled by its corresponding electro-valve driven by a PLC-type control device or an external computer system, according to its programming.

4. Adaptable supporting device according to any one of claims 1 to 3, wherein each vertical actuator (1) is individually moveable in a Z direction, and modularly moveable in an X direction.

5. Adaptable supporting device according to any one of claims 1 to 4, wherein the vertical actuators (1) are fitted on their top part with a magnetic vacuum cup (2).

## Patentansprüche

1. Anpassbare Stützvorrichtung mit indexierter Relativpositionierung, von der Art, die eine Vielzahl von vertikalen Aktuatoren (1) umfasst, die auf Querelementen (3) angeordnet sind, welche über einer Ausnehmung positioniert und relativ zueinander bewegbar sind, die in der Industrie bei Bearbeitungsverfahren verwendet werden, um Teile mit verschiedenartigen oder unregelmäßigen Formen aufzusetzen, **dadurch gekennzeichnet, dass**
die Querelemente (3) an ihren Enden miteinander mittels zweier Pneumatikzylinder (7, 8) von unterschiedlicher Hublänge verbunden sind, die an der Rückseite ihrer Köpfe oder hinteren Teile (13) miteinander verbunden sind und mit jedem Querelement (3) an den Enden (14) jeder Kolbenstange (15) verbunden sind.

2. Anpassbare Stützvorrichtung nach Anspruch 1, wobei die Querelemente (3) durch die Pneumatikzylinder (7, 8) mit den längeren Hublängen und den kürzeren Hublängen in Abständen mit vier verschiedenen Werten eingestellt sind:
A) - Minimaler Abstand - beide Zylinder (7, 8) deaktiviert
B) - Zweiter Abstand - Zylinder mit kürzerer Hublänge (8) aktiviert
C) - Dritter Abstand - Zylinder mit längerer Hublänge (7) aktiviert
D) - Maximaler Abstand - beide Zylinder (7, 8) aktiviert

3. Anpassbare Stützvorrichtung nach Anspruch 1 oder 2, wobei jeder Pneumatikzylinder (7, 8) über sein entsprechendes Elektroventil geregelt wird, das von einer PLC-Kontrollvorrichtung oder einem externen Computersystem gemäß seiner Programmierung angesteuert wird.

4. Anpassbare Stützvorrichtung nach einem der Ansprüche 1 bis 3, wobei jeder vertikale Aktuator (1) individuell in eine Z-Richtung bewegbar ist, und modular in eine X-Richtung beweglich ist.

5. Anpassbare Stützvorrichtung nach einem der Ansprüche 1 bis 4, wobei die vertikalen Aktuatoren (1) an ihrer Oberseite mit einem magnetischen Saugnapf (2) ausgerüstet sind.

## Revendications

1. Un dispositif de support adaptable à positionnement relatif indexé du type de ceux comprenant une multitude d'actuateurs verticaux (1) disposés dans des modules-ponts transversaux (3) situés sur un renfoncement et pouvant se déplacer les uns par rapport aux autres, utilisés dans l'industrie pour la fixation de pièces de différentes formes ou de forme irrégulière pendant leur usinage, **caractérisé en ce que**
les modules-ponts transversaux (3) sont reliés l'un à l'autre en leur extrémité au moyen de deux vérins hydrauliques (7, 8) de longueur de course différente assemblés l'un à l'autre par la partie arrière de leur culasse ou par les composants arrières (13) et reliés à chacun des modules-ponts transversaux (3) au niveau de l'extrémité (14) de chaque tige (15).

2. Dispositif de support adaptable selon la Revendication 1,
dans lequel les modules-ponts transversaux (3) sont ajustés par les vérins hydrauliques (7, 8) avec des longueurs de course plus longues et plus courtes, activés en fonction de quatre valeurs différentes :
A) - Distance minimale - les deux vérins (7, 8) sont désactivés
B) - Deuxième distance - le vérin avec la longueur de course plus coute (8) est activé
C) - Troisième distance - le vérin avec la longueur de course plus longue (7) est activé
D) - Distance maximale - les deux vérins (7, 8) sont activés.

3. Dispositif de support adaptable selon la Revendication 1 ou 2,
dans lequel chacun des vérins hydrauliques (7, 8) est contrôlé par son électrovanne correspondante commandée par une unité de commande du type API ou par un système informatique externe, en fonction de sa programmation.

4. Dispositif de support adaptable selon l'une quelconque des Revendications 1 à 3,
dans lequel chaque actuateur vertical (1) est déplaçable dans une direction Z de manière individuelle et dans une direction X de manière modulaire.

5. Dispositif de support adaptable selon l'une quelconque des Revendications 1 à 4,
dans lequel les extrémités supérieures des actuateurs verticaux (1) sont équipées d'une ventouse magnétique (2).
